(19) Europäisches Patentamt
European Patent Office
Office européen des brevets

(11) Publication number: **0 372 517 A2**

(12) # EUROPEAN PATENT APPLICATION

(21) Application number: **89122470.1**

(51) Int. Cl.5: **G11B 7/24**

(22) Date of filing: **06.12.89**

(30) Priority: **07.12.88 JP 307790/88**
**08.12.88 JP 308792/88**
**28.12.88 JP 329395/88**

(43) Date of publication of application:
**13.06.90 Bulletin 90/24**

(84) Designated Contracting States:
**DE FR GB NL**

(71) Applicant: **Tosoh Corporation**
**No. 4560, Oaza-tonda**
**Shin-nanyo-shi Yamaguchi-ken(JP)**

(72) Inventor: **Asano, Mutsumi**
**1-2-37, Teraodai**
**Ayase-shi Kanagawa(JP)**
Inventor: **Kasai, Kiyoshi**
**1775, Okada**
**Atsugi-shi Kanagawa(JP)**
Inventor: **Misaki, Hidehiko**
**2398, Kawaraguchi**
**Ebina-shi Kanagawa(JP)**
Inventor: **Higuchi, Shinji**
**1-2-37, Teraodai**
**Ayase-shi Kanagawa(JP)**
Inventor: **Ushio, Michie**
**573-8, Higashihongomachi Midori-ku**
**Yokohama-shi Kanagawa(JP)**

(74) Representative: **Bühling, Gerhard, Dipl.-Chem. et al**
**Patentanwaltsbüro Tiedtke-Bühling-Kinne**
**Grupe-Pellmann-Grams-Struif Bavariaring 4**
**D-8000 München 2(DE)**

(54) **Magneto-optical recording medium and process for production of the same.**

(57) A magneto-optical recording medium comprising a substrate having thereon a magneto-optical recording film and at least one coating film provided on the surface and/or back of said magneto-optical recording film and a process for producing the same are disclosed, wherein said at least one coating film contains silicon, carbon, nitrogen, and hydrogen as constituent elements. The coating film affords protection against corrosion and/or Kerr effect enhancement while exhibiting excellent adhesion to the substrate and magnetic film to provide a magneto-optical recording medium having excellent reliability, excellent read-out performance properties as well as excellent recording sensitivity.

FIG. 1

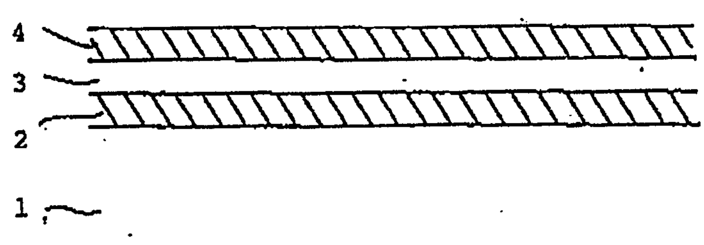


EP 0 372 517 A2

# MAGNETO-OPTICAL RECORDING MEDIUM AND PROCESS FOR PRODUCTION OF THE SAME

## FIELD OF THE INVENTION

This invention relates to a magneto-optical recording medium and a process for the production of the same. More particularly, it relates to a magneto-optical recording medium comprising a substrate having thereon a magneto-optical recording magnetic film and at least one coating film.

## BACKGROUND OF THE INVENTION

Photo recording media which are conventionally known as rewtittable photo recoding media capable of writing and erasing include a phase transition type, a photochromic type, and a magneto-optical type. Of these re-writable photo recording media, the magneto-optical type recording media are characterized by high recording speed and excellent resistance to repeated use.

Conventional magneto-optical recording media comprise a substrate having thereon a magneto-optical recording magnetic film (hereinafter simply referred to as a magnetic film) comprising a rare earth metal-transition metal film (hereinafter referred to as an RE-TM film) or an MnBi type film, and those using an RE-TM film are excellent in general characteristics. However, these films are inferior in corrosion resistance and liable to undergo deterioration arising from corrosion, such as change of coercive force, reduction in angle of Kerr rotation, and pitting, which leads to reduction in C/N (carrier to noise) ratio and increase in error ratio when used as a recording medium.

In order to solve this problem. it is known to provide a coating film on one or both sides of the magnetic film to improve corrosion resistance.

Where a coating film is formed on the light incident side of the magnetic film, it also brings about enhancement of Kerr effect, i.e., an increase of Kerr rotation angle, of the magnetic film, but the coating film must have a large refractive index before the Kerr effect enhancement can be obtained.

On the other hand, it is desired that the coating film formed on a magnetic film and/or a substrate made of a synthetic resin, glass, etc. should be chemically stable and capable of blocking oxygen or moisture, and exhibit good affinity for the substrate or magnetic film. When, in particular, in using a synthetic resin, e.g., polycarbonate and acrylic resins, as a substrate, the coating film is keenly demanded to be impermeable to oxygen, moisture, etc. present in the substrate or permeating through the substrate while exhibiting good affinity for the substrate and magnetic film. Where the coating film is provided on the light incident side of the magnetic film, it is also required to have transparency enough for incident light to sufficiently reach the magnetic film.

Conventionally reported coating films meeting either one or both of the purpose of magnetic film protection and the purpose of Kerr effect enhancement include films of oxides, e.g., $SiO_2$ and $A\ell_2O_3$, and films of nitrides, e.g., $A\ell N$ and $Si_3N_4$. It has been pointed out, however, that magneto-optical recording media having such a coating film on a magnetic film have the following disadvantages. That is, coating films of an oxide, e.g., $SiO_2$ or $A\ell_2O_3$, release oxygen readily oxidizing the rare earth metal to cause deterioration of RE-TM film characteristics. Those using $A\ell N$ lack stability against moisture, and those using SiN exhibit poor adhesion to a substrate and are liable to undergo peeling off.

## SUMMARY OF THE INVENTION

An object of this invention is to provide a magneto-optical recording medium in which a magnetic film is coated with a coating film having a function of protecting the magnetic film from corrosion and/or a function of enhancing Kerr effect.

Another object of this invention is to provide a process for producing the above-described magneto-optical recording medium.

In the light of the above-described problems associated with conventional techniques, the inventors have conducted extensive and intensive investigations and, as a result, found out a coating film having a function of protecting a magnetic film from corrosion and/or a function of enhancing Kerr effect, thus having reached the present invention.

The present invention provides a magneto-optical recording medium comprising a substrate having thereon a magneto-optical recording film and at least one coating film provided on the surface and/or the back of the recording film.

The present invention also provides a process for producing such a magneto-optical recording medium.

## BRIEF DESCRIPTION OF THE DRAWINGS

Figures 1 and 2 each illustrates a schematic cross section of the magneto-optical recording medium according to the present invention.

Figures 3(a) through 3(e) each shows an infrared absorption spectrum of the coating film of the magneto-optical recording medium obtained in Examples 1 to 3, 7 and 8, respectively.

Figure 4 shows an infrared absorption spectrum of the coating film of Comparative Example 1.

Figure 5 shows a plot of film forming rate vs. carbon atom content.

Figure 6 shows a plot of stress of a film vs. carbon atom content.

Figure 7 is a graph showing changes of reflectance with time of the magneto-optical recording media obtained in Examples 12 to 14.

Figure 8 is a graph showing changes of reflectance with time of the magneto-optical recording media obtained in Comparative Example 3.

Figure 9 is a graph depicting a relationship between linear velocity and optimum recording power in the magneto-optical recording media obtained in Example 13 and Comparative Example 3.

Figure 10 is a graph depicting a relationship between linear velocity and optimum recording power in Example 15 and Comparative Example 4.

Figures 11(a) through 11(c) each shows an infrared absorption spectrum of the coating film of Examples 20, 21 or 22, respectively.

Figure 12 is an infrared absorption spectrum of the coating film of Comparative Example 7.

## DETAILED DESCRIPTION OF THE INVENTION

Magnetic films which can be used in the magneto-optical recording media according to the present invention include MnBi-based films and RE-TM films. Included in the RE-TM films are Tb-Fe-Co-based films, Gd-Fe-Co-based films, Gd-Tb-Fe-based films, Tb-Co-based films, Tb-Dy-Fe-Co-based films, Nd-Dy-Fe-Co-based films, and Dy-Fe-Co-based films. In addition, the present invention is also applicable to other recording media using recording materials which are susceptible to deterioration due to monomers or moisture in synthetic resins or atmospheric moisture, for example, elements of oxygen family for WORM (write once read many) recording media.

Suitable substrates which can be used in the present invention include transparent substrates made of polycarbonate, glass, epoxy resins, etc. The recording media of the present invention may have an arbitrary shape and include cards, tapes, sheets, drums as well as general disks.

The coating film according to the present invention is provided between a magnetic film and a substrate for the purpose of obtaining at least one of Kerr effect enhancement and protection from corrosion, etc, or it is provided on the back of the magnetic film for the purpose of protecting the magnetic film from corrosion, etc. For example, in cases where a magnetic film is an RE-TM film or an MnBi-based film, the coating film provided between the magnetic film and the substrate produces both of the two effects stated above. Thus, the magneto-optical recording media of the present invention embrace those having a coating film showing infrared absorption on both sides of a magnetic film and those having a coating film only on one side of a magnetic film, with the other side having no coating film or having other coating film.

The essential feature of the present invention resides in that the coating film contains at least four constituent elements of Si, N, C, and H. It is preferable that the carbon content in the coating film falls within the range of from 5 to 60 atomic %, more preferably from 5 to 30 atomic %, based on the sum of the constituent elements other than H. It is also preferable that the nitrogen content in the coating film is at least 1 atomic % based on the sum of the constituent elements other than H. The coating film containing carbon atoms within 60 atomic % shows a function as a protective fim of the magnetic film, to thereby obtain Kerr effect enhancement. Further, the coating film containing carbon atoms of 30 atomic % or less is more stable.

The coating film functioning as a protective film is characterized by showing an absorption peak in the infrared region at 2170 ± 30 $cm^{-1}$ that is assigned to Si-H bond. A preferable coating film functioning as a protective film also has absorption peaks in the infrared region at 3350 ± 30 $cm^{-1}$ and 1160 ± 30 $cm^{-1}$ that are assigned to N-H bond and a sharp absorption peak at 830 ± 50 $cm^{-1}$ that is assigned to an overlap of Si-C bond and Si-N bond. The above-recited wavenumber range of infrared absorption is a range within which the absorption peak is centered, not meaning that the whole absorption band is within that range. While it is known that changes of preparation conditions cause chemical shifts of these absorption peaks in wavenumber, the peak assigned to Si-C bond and Si-N bond is, in particular, also largely shifted depending on the composition.

Existence of carbon atoms in the coating film increases affinity for a substrate to improve adhesion to the substrate, thus inhibiting peeling off of the coating film and generation of cracks. Further, free bonds of Si are bonded to H to improve transparency, and the existence of H improves affinity for the substrate. Thus, the basic skeleton of the coating film is composed of stable Si-N and Si-C bonds and is therefore chemically stable and also excellent in oxygen and moisture blocking.

The coating film has a refractive index of at least 1.9. According to the present invention, since hydrogen is properly introduced to the coating film, the coating film of the present invention has high transparency and a high refractive index suitable for Kerr effect enhancement.

In the cases where the coating film is interposed between a substrate and a magnetic film, the coating film preferably has a thickness between 60 nm and 100 nm in order to effectively take advantage of the Kerr effect enhancement function. In the cases where the coating film is used for back protection of a magnetic film, too a thin film has a reduced protective effect, and too a thick film requires a longer time for film formation. Accordingly, a suitable thickness in these cases is selected from a range of, for example, from 50 to 150 nm.

In producing the magneto-optical recording medium of the present invention, methods for forming the coating film include reactive sputtering using metallic silicon as a target and a mixed gas of an inert gas, ammonia, and a hydrocarbon gas (preferably methane gas) or a mixed gas of an inert gas, ammonia, a hydrocarbon gas (preferably methane gas), and hydrogen gas, reactive sputtering using a mixed sintered body of silicon carbide and silicon nitride as a target and a mixed gas of an inert gas and hydrogen gas, and CVD (chemical vapor deposition) using a silane gas, ammonia, a hydrocarbon gas, etc. which may be diluted with hydrogen gas, etc.

Apparatus for carrying out reactive sputtering for the formation of a coating film are not particularly limited. However, taking it into consideration that the sputtering temperature should be kept low in the case of using a resin substrate and also a temperature rise should desirably be avoided even when heating is conducted in the case of using a glass substrate, etc., it is preferable to employ a magnetron apparatus by which the substrate temperature can easily be controlled and a high rate of film formation can be achieved. Preliminary evacuation preceding sputtering is preferably effected to a degree of vacuum as high as possible in order to remove influences of any residual gases.

In using metallic silicon as a target, it is preferable that the total sputter gas pressure is from 0.15 to 1 Pa, with the proportions of ammonia gas and a hydrocarbon gas or hydrogen gas in the mixed gas being from 2 to 40% by volume and from 2 to 30% by volume, respectively.

Also in using a silicon carbide-silicon nitride mixed sintered body as a target, the total sputter gas pressure is preferably from 0.15 to 1 Pa, and the proportion of hydrogen gas in the mixed gas is from 5 to 50% by volume. Preferably, the hydrogen atom is present in an amount of 20 atomic % or more in the sputter gas.

Thus, there is provided a coating film exhibiting strong adhesion with good mass-productivity.

The present invention is now illustrated based on preferred embodiments with reference to accompanying drawings.

Fig. 1 shows a cross section of one of the embodiments of the magneto-optical recording medium according to the present invention. Numeral 1 indicates a transparent substrate made of glass, polymethyl methacrylate, polycarbonate, etc. on which grooves (not shown) are formed for tracking guidance. Numeral 2 is a first coating film interposed between substrate 1 and magnetic film 3, which has a function of Kerr effect enhancement combined with a protective function. Numeral 3 is a magnetic film, for example, a Tb-Fe-Co-based RE-TM film. Numeral 4 indicates a second (back side) protective film having a protective function.

First protective film 2 and second protective film 4 each constitutes a coating film characterized by, for example, infrared absorption to thereby provide the magneto-optical recording medium of the present invention.

Fig. 2 is a cross section of another embodiment of the magneto-optical recording medium of the present invention. In this embodiment, the coating film between substrate 5 and magnetic film 8 is composed of two layers 6 and 7. For example, layer 6 may be an $SiO_2$ film for a protective purpose while layer 7 may be a ZnS film for Kerr effect enhancement. Numerals 8 and 9 indicate a magnetic film and a back side protective film, respectively.

The present invention will be described below in greater detail by way of Examples, but it should be understood that the present invention is not deemed to be limited thereto.

## EXAMPLES 1 TO 11

A coating film, a characteristic element constituting the magneto-optical recording medium of the present invention, was formed on a quartz glass substrate or an N-type silicon wafer to a thickness of about 240 nm. Thus, Samples 1 to 11 were prepared. Characteristics of the coating films of these samples were evaluated.

Formation of the coating film was carried out by means of a diode magnetron sputtering apparatus having a radio frequency power source (frequency: 13.56 MHz) and a direct current power source ("CFS-4ES" manufactured by Tokuda Seisakusho). Metallic silicon was set as a target. After the sputter chamber was preliminarily evacuated to a degree of vacuum of $2 \times 10^{-4}$ Pa or less, the substrate was revolved at 20 rpm without being heated, and radio frequency sputtering was performed at an electrical power of 200 W or 300 W while introducing a mixed gas having a composition shown in Table 1 below.

The rate of coating film formation was determined using a probe type film thickness gauge. The refractive index of the protective film formed on the silicon wafer was measured with an ellipsometer. The transmittance (at a wavelength of 830 nm) of the protective film formed on the quartz glass substrate was measured with a spectrophotometer. The results of these measurements are shown in Table 1 and Fig. 5. Fig. 5 demonstrates that the rate of film formation is high as the the carbon content in the film increases. A high rate of film formation is advantageous for reduction of time for the production of magneto-optical recording media.

Further, the constituent elements of the protective film were quantitatively analyzed by EPMA (electron probe microanalysis), and the results obtained are also shown in Table 1.

TABLE 1

| | Sample No. | | | | | | | | | | |
|---|---|---|---|---|---|---|---|---|---|---|---|
| | 1 | 2 | 3 | 4 | 5 | 6 | 7 | 8 | 9 | 10 | 11 |
| Gas Flow Rate(sccm): | | | | | | | | | | | |
| Ar | 20 | 20 | 20 | 20 | 20 | 20 | 20 | 20 | 20 | 20 | 20 |
| $NH_3$ | 4 | 4 | 3 | 4 | 4 | 4 | 4 | 4 | 0.6 | 1.0 | 1.4 |
| $CH_4$ | 1 | 0.8 | 0.8 | 0.6 | 1.0 | 1.4 | 1.8 | 2.0 | 4 | 4 | 4 |
| Sputtering Target | Si | Si | Si | Si | Si | Si | Si | Si | Si | Si | Si |
| Electrical Power(W) | 200 | 200 | 200 | 300 | 300 | 300 | 300 | 300 | 300 | 300 | 300 |
| Film Forming Rate (nm/m) | 9.3 | 9.1 | 8.9 | Shown in Fig.5 | Shown in Fig.5 | Shown in Fig.5 | Shown in Fig.5 | Shown in Fig.5 | Shown in Fig.5 | Shown in Fig.5 | Shown in Fig.5 |
| Transmittance (%) | 93 | 94 | 93 | 92 | 93 | 93 | 92 | 93 | ≥90 | ≥90 | ≥90 |
| Reflactive Index | 2.03 | 2.11 | 2.08 | 2.15 | 2.05 | 1.95 | 1.93 | 1.91 | 2.17 | 2.10 | 2.08 |
| Constituent Elements (at.%)* | | | | | | | | | | | |
| Si | 46.5 | 48.0 | 56.3 | 45.7 | 46.5 | 42.3 | 39.6 | 38.7 | 40.8 | 39.7 | 37.0 |
| C | 20.5 | 19.6 | 18.0 | 18.1 | 20.5 | 25.2 | 28.4 | 31.4 | 56.3 | 53.5 | 52.2 |
| N | 33.0 | 32.4 | 25.7 | 36.2 | 33.0 | 32.5 | 32.0 | 29.9 | 2.9 | 6.8 | 10.8 |

Note: *H atam is excluded.

As can be seen from the results of Table 1, according as the amount of $CH_4$ introduced increases, the C content of the coating film increases. If the amount of $CH_4$ introduced exceeds 7.5% by volume of the total sputter gas, the C content exceeds 30 atomic %.

It can be seen that the protective film according to the present invention has not only sufficient transparency but a high refractive index reaching about 1.9, from which satisfactory Kerr effect enhancement can be expected. It can also be seen that the film forming rate achieved in the present invention is higher than that of an SiN film hereinafter described.

Further, the infrared absorption spectrum of the protective films of Samples 1 to 3, 7 and 8 formed on the silicon wafer as determined with a Fourier transform infrared spectrophotometer ("JIR-1000" manufactured by JEOL Ltd.) is shown in Figs. 3(a), 3(b), (3c), 3(d), and 3(e), respectively. The results shown in the figures are those corrected by subtracting the absorption of the silicon wafer substrate. Any of the protective films of Samples 1 to 3, 7 and 8 shows absorptions at around 2170 $cm^{-1}$ and around 1160 $cm^{-1}$, which appear to be assigned to Si-H bond.

In addition, in the spectrum, absorptions at around 3350 $cm^{-1}$ and around 1160 $cm^{-1}$, which appear to be assigned to N-H bond, are shown. These absoprtions prove the existence of H in the film.

Moreover, any of the films have a sharp absorption at around 830 $cm^{-1}$, that shows uniform dispersion of Si-C bonds and Si-N bonds in the film, and this dispersion provides stabilization of the film.

The stress of the coating films of Samples 4 to 8 formed on the circular cover glass was calculated from the warpage and plotted vs. C content in Fig. 6. From Fig. 6, it can be seen that the stress is decreased as the C content increases. Namely, the coating film according to the present invention has a reduced stress as compared with the SiN film to thereby provide a highly reliable recording medium free from peeling off of the film and cracking.

## COMPARATIVE EXAMPLES 1 AND 2

A comparative coating film was formed on a quartz glass substrate or an N-type silicon wafer substrate to a thickness of about 250 nm. Thus, Samples 12 and 13 were prepared.

Formation of the coating film was carried out by means of a diode magnetron sputter apparatus "CFS-4ES" having a radio frequency power source (frequency: 13.56 MHz) and a direct current power source. Metallic silicon was set as a target. After the sputter chamber was preliminarily evacuated to a degree of vacuum of $2 \times 10^{-4}$ Pa or less, the substrate was revolved at 20 rpm without being heated, and radio frequency sputtering was performed at an electrical power of 200 W or 300 W while introducing a mixed gas having a composition shown in Table 2 below.

The film forming rate, refractive index, and transmittance (at a wavelength of 830 nm) of the thus formed protective film were determined in the same manner as in Examples 1 to 11, and the results obtained are shown in Table 2.

Further, the results of elemental analysis of the protective film by EPMA are shown in Table 2 and Fig. 5.

Still further, the stress of the coating film of Sample 13 is shown in Fig. 6.

TABLE 2

| | Sample No. | |
|---|---|---|
| | 12 | 13 |
| Gas Flow Rate(sccm): | | |
| Ar | 20 | 20 |
| $N_2$ | 4 | 4 |
| Sputtering Target | Si | Si |
| Electrical Power(W) | 200 | 300 |
| Film Forming Rate (nm/m) | 6.1 | Shown in Fig.5 |
| Transmittance (%) | 93 | 93 |
| Reflactive Index | 1.96 | 2.10 |
| Constituent Elements (at.%)* | | |
| Si | 46.2 | 45.2 |
| N | 54.8 | 54.8 |

Note: *H atam is excluded.

Furthermore, the infrared absorption spectrum of the protective film of Sample 12 on the silicon wafer in as determined with a Fourier transform infrared spectrophotometer is shown in Fig. 4. The results shown are those corrected for the absorption of the silicon wafer. As is shown in Fig. 4, the coating film formed using a mixed gas of Ar and $N_2$ as a sputter gas has no absorption assigned to N-H bond at around 3350 $cm^{-1}$, around 2170 $cm^{-1}$ and around 1160 $cm^{-1}$.

## EXAMPLES 12 TO 19 AND COMPARATIVE EXAMPLES 3 TO 6

A magneto-optical recording medium having the structure of Fig. 1 was produced, in which 75 nm thick magnetic film 3 having a composition of $Tb_{24}Fe_{64.5}Co_{11.5}$ was formed on a polycarbonate disk substrate (diameter: 13 cm; thickness: 1.2 mm) having a guiding groove (pitch: 1.6 µm; groove width: 0.6 µm) with a coating film being formed on both sides of magnetic film 3.

The production was carried out using the same sputtering apparatus as used in Examples 1 to 11. The coating films were formed by radio frequency sputter, and the magnetic film was formed by direct current sputter using TbFeCo as a target. The conditions for coating film formation in Examples 12 to 19 were the same as in Examples 1 to 3, 5, 7, 8, 9 and 11, respectively. The thickness of coating film 2 and that of back side protective film 4 were fixed at 85 nm and 100 nm, respectively.

For comparison, magneto-optical recording media were produced in the same manner as described above, except that the conditions for coating film formation in Comparative Examples 3 and 4 were the same as in Comparative Examples 1 and 2.

Further, magneto-optical recording media of Comparative Examples 5 and 6 were produced in the same manner as in Comparative Examples 3 and 4, respectively, except that coating film 2 was not formed.

### Evaluation Test 1:

Each of the recording media of Examples 12 and 19 and Comparative Examples 3 and 4 was evaluated for film adhesion according to the following test method, and the results obtained are shown in Table 3 below.

The surface of the back side protective film was crosshatched with a knife to make a hundred 1 mm squares. A cellophane tape was adhered thereon and then stripped off. The number of square remaining on the substrate was counted, and an average of 10 measurements was obtained.

TABLE 3

| Example No. | Number of Remaining Squares |
|---|---|
| Example 12 | 84 |
| Example 13 | 83 |
| Example 14 | 82 |
| Example 15 | 84 |
| Example 16 | 84 |
| Example 17 | 86 |
| Example 18 | 90 |
| Example 19 | 88 |
| Comparative Example 3 | 12 |
| Comparative Example 4 | 13 |

It is apparent from Table 3 that the protective films according to the present invention are far superior to the comparative films in adhesion.

Evaluation Test 2:

Each of the recording media obtained in Examples 12 to 19 and Comparative Examples 3 to 6 was evaluated for reproduction characteristics using a drive apparatus as follows.

The drive apparatus used had a wavelength of 830 nm and a lens having an NA of 0.5. Conditions of determination were 4 m/s in linear velocity; 500 Oe in external magnetic field; 1 MHz in recording frequency; 50% in duty ratio; and 0.8 mW in reading power.

Recording was conducted with a recording power being varied within a range of from 3 mW to 8 mW at 0.2 mW intervals, and the C/N ratio at the point where the second harmonic became the minimum was obtained. The results are shown in Table 4 below.

TABLE 4

| Example No. | C/N Ratio (dB) |
|---|---|
| Example 12 | 54.9 |
| Example 13 | 55.1 |
| Example 14 | 55.0 |
| Example 15 | 54.9 |
| Example 16 | 54.7 |
| Example 17 | 54.7 |
| Example 18 | 55.4 |
| Example 19 | 55.3 |
| Comparative Example 3 | 54.6 |
| Comparative Example 4 | 54.4 |
| Comparative Example 5 | 50.3 |
| Comparative Example 6 | 50.3 |

It can be seen that the C/N ratio in any of Examples 12 to 19 and Comparative Examples 3 and 4 was higher by 4 to 5 dB than that in Comparative Examples 5 and 6 in which the recording medium had no coating film for Kerr effect enhancement. It was thus turned out that the coating film of the magneto-optical recording media according to the present invention exhibits a sufficient Kerr effect enhancement function.

Evaluation Test 3:

Each of the recording media obtained in Examples 12 to 19 and Comparative Examples 3 and 4 was maintained at a temperature of 65 °C and at a relative humidity of 90%, and the changes of appearance and reflectance with time were observed.

The changes of reflectance in Examples 12 to 14 are shown in Fig. 7, and those in Comparative Example 3 are shown in Fig. 8.

The recording media of Comparative Examples 3 and 4 suffered from cracking and reduction in reflectance in 100 to 300 hours. To the contrary, the recording media of Examples 12 to 10 suffered from neither cracking nor pitting and underwent substantially no change in reflectance even when maintained for 1500 hours, proving excellent in blocking properties against moisture and oxygen.

The difference in durability between the magneto-optical recording media according to the present invention in which a coating film having a specific composition as shown by their infrared absorption spectra is employed and the comparative magneto-optical recording media is believed to arise from the difference in adhesion of the coating film and whether or not the coating film contains an N-H bond. In other words, in the coating film according to the present invention, free bonds of Si and N are bonded through Si-H bond and N-H bond to thereby provide a film having improved softness and a reduced stress, which, in combination with the improved adhesion, makes the film freed from cracks or peeling off.

Evaluation Test 4:

Writing and reading were conducted on each of the magneto-optical recording media obtained in Examples 13 and 15 and Comparative Examples 3 and 4 with a linear velocity and a recording frequency being varied so as to obtain a recording bit length of 1.4 µm to examine a relationship of the optimum recording power vs. linear velocity. The drive apparatus, external magnetic field, duty ratio, and reading power were the same as in Evaluation Test 2. The recording power was varied within a range of from 3 mW to 10 mW, and the recording power at which the second harmonic became the minimum was taken as the optimum recording power. The results obtained are shown in Figs. 9 and 10.

It can be seen from Figs. 9 and 10 that the medium of the present invention is superior to the conventional medium having an SiN film as a coating film in recording sensitivity by 1 to 1.5 mW and, according as the linear velocity increases, the difference in recording sensitivity between them becomes more notable.

EXAMPLES 20 TO 22 AND COMPARATIVE EXAMPLE 7

A coating film was formed on a quartz glass substrate or an N-type silicon wafer to a thickness of about 180 nm.

Film formation was carried out by means of a diode magnetron sputter apparatus "CFS-4ES" having a radio frequency power source (frequency: 13.56 MHz) and a direct current power source. A mixed sintered body of silicon carbide and silicon nitride (SiC: 50 mol%; $Si_3N_4$: 50 mol%) was set as a target. After the sputter chamber was preliminarily evacuated to a degree of vacuum of 2 x $10^{-4}$ Pa or less, the substrate was revolved at 20 rpm without being heated, and radio frequency sputtering was performed at an electrical power of 300 W while introducing a mixed gas having a composition shown in Table 5 below.

For comparison, a comparative coating film was formed on a quartz glass substrate or an N-type silicon wafer substrate to a thickness of about 170 nm in the same manner as described above. The sputter gas used is shown in Table 5 below.

The rate of film formation was determined using a probe type film thickness gauge. The refractive index of the protective film on the silicon wafer was measured with an ellipsometer. The transmittance (at a wavelength of 830 nm) of the protective film on the quartz glass substrate was measured with a spectrophotometer. Further, a coating film was formed on a circular cover glass (thckness: 0.15 mm; diameter: 20 mm) as a substrate, and the curvature radius of the substrate was measured before and after the film formation by means of a probe type film thickness gauge to calculate a stress of the film. The results of these measurements are shown in Table 5.

TABLE 5

| | Gas Flow Rate (sccm) | | Film Forming Rate (nm/m) | Transmittance (%) | Refractive Index | Stress x $10^9$ (dyne/cm) |
|---|---|---|---|---|---|---|
| | Ar | $H_2$ | | | | |
| Example 20 | 22 | 2 | 8.7 | 97 | 2.32 | -11.5 |
| Example 21 | 22 | 5 | 9.1 | 97 | 2.17 | -9.7 |
| Example 22 | 22 | 10 | 9.0 | 98 | 2.16 | -7.6 |
| Comparative Example 7 | 22 | 0 | 7.7 | 89 | 2.33 | -13.0 |

It can be seen that the protective film in the magneto-optical recording medium of the present invention exhibits improved transparency while retaining a high refractive index reaching 2.1 or more and is therefore expected to bring about satisfactory Kerr effect enhancement. Further, when a mixed gas of hydrogen and an inert gas is used as a sputter gas according to the process of the present invention, the film forming rate is improved and, also, the resulting film has a reduced stress as compared with Comparative Example 7 wherein only an inert gas was used as a sputter gas. It was thus turned out that process of the present invention provides magneto-optical recording media having satisfactory durability with high productivity.

Further, the infrared absorption spectrum of each of the recording media formed on the silicon wafer was determined using a Fourier transform infrared spectrophotometer ("JIR-100"). The results as corrected for the absorption of the silicon wafer are shown in Figs. 11(a) (Example 20), 11(b) (Example 21), 11(c) (Example 22) and 12 (Comparative Example 7). Any of the protective films according to the present invention shows absorptions in the vicinity of 2170 $cm^{-1}$ and in the vicinity of 800 $cm^{-1}$, which are considered to be assigned to Si-H bond and an overlap of Si-N bond and Si-C bond; whereas the coating film of Comparative Example 7 which was formed using only argon as a sputter gas showed no absorption at around 2170 $cm^{-1}$.

Results of elemental analysis of the above prepared coating films by EPMA are shown in Table 6 below.

TABLE 6

| Example No. | Si (at.%*) | C (at.%*) | N (at.%*) |
|---|---|---|---|
| Example 20 | 52.6 | 25.1 | 22.3 |
| Example 21 | 53.2 | 25.0 | 21.8 |
| Example 22 | 54.5 | 25.0 | 20.5 |
| Comparative Example 7 | 48.6 | 25.3 | 26.1 |

Note: * H atom is excluded.

## EXAMPLES 23 TO 25 AND COMPARATIVE EXAMPLE 8

A magneto-optical recording medium having the structure of Fig. 1 was produced, in which 75 nm thick magnetic film 3 having a composition of $Tb_{24}Fe_{64.5}Co_{11.5}$ was formed on a polycarbonate disk substrate (diameter: 13 cm; thickness: 1.2 mm) having a guiding groove (pitch: 1.6 µm; groove width: 0.6 µm) with a coating film being formed on both sides of magnetic film 3.

The production was carried out using the same sputter apparatus as used in Examples 20 to 22. The coating films were formed by radio frequency sputter, and the magnetic film was formed by direct current sputter using TbFeCo as a target. The conditions for forming the coating films of Examples 23, 24, and 25 were the same as in Examples 20, 21, and 22, respectively. The thickness of coating film 2 and that of back side protective film 4 were fixed at 85 nm and 100 nm, respectively.

For comparison, a coating film was produced in the same manner as described above, except that the conditions were the same as in Comaprative Example 7.

Evaluation Test 8:

Each of the magneto-optical recording media obtained in Examples 23 to 25 and Comparative Example 8 was evaluated for reproduction characteristics in the same manner as in Evaluation Test 2, and the results obtained are shown in Table 7.

TABLE 7

| Example No. | C/N Ratio (dB) |
| --- | --- |
| Example 23 | 54.7 |
| Example 24 | 54.5 |
| Example 25 | 55.3 |
| Comparative Example 8 | 50.6 |

It can be seen from the results of Table 7 that the C/N ratio of the magneto-optical recording media according to the present invention is increased by 4 to 5 dB over that of the comparative recording media of Comparative Example 8. It is thus proved that the coating film in the magneto-optical recording media of the present invention exhibits a sufficient Kerr effect enhancement function.

Evaluation Test 9:

Each of the recording media of Examples 23 through 25 and Comparative Example 8 was maintained under conditions of 65° C and 90% RH for 1200 hours, and any change with time was observed.

As a result, neither cracking nor pitting were observed on the disk surface of the recording media of Examples 23 through 25. Neither was observed peeling off of the film. In the recording medium of Comparative Example 8, on the other hand, cracks were observed on the peripheral part of the disk and the central mirror portion.

The difference in durability between the magneto-optical recording media according to the present invention and the comparative recording medium is considered to arise from the difference in adhesion and the difference in bonding system in the film. More specifically, in the protective film of the present invention, free bonds of Si-N and Si-C are bonded to H through Si-H bond to make the film soft and to reduce the stress, which, combined with the improved adhesion owing to the existence of C and H, appears to prevent cracking or peeling off of the film.

As described above, the magneto-optical recording medium in accordance with the present invention is characterized by its coating film which affords protection against corrosion and/or magneto-optical enhancement while exhibiting excellent adhesion to a substrate and a magnetic film. Therefore, the magneto-optical recording medium of the invention are excellent in reliability and read-out performance properties. Moreover, they are excellent in recording sensitivity.

While the invention has been described in detail and with reference to specific embodiment thereof, it will be apparent to one skilled in the art that various changes and modifications can be made therein without departing from the spirit and scope thereof.

A magneto-optical recording medium comprising a substrate having thereon a magneto-optical recording film and at least one coating film provided on the surface and/or back of said magneto-optical recording film and a process for producing the same are disclosed, wherein said at least one coating film contain silicon, carbon, nitrogen, and hydrogen as constituent elements. The coating film affords protection against corrosion and/or Kerr effect enhancement while exhibiting excellent adhesion to the substrate and magnetic film to provide a magneto-optical recording medium having excellent reliability, excellent read-out performance properties as well as excellent recording sensitivity.

**Claims**

1. A magneto-optical recording medium comprising a substrate having thereon a magneto-optical recording film and at least one coating film provided on the surface and/or back of said magneto-optical recording film, wherein said at least one coating film contains silicon, carbon, nitrogen, and hydrogen as constituent elements.

2. A magneto-optical recording medium as claimed in Claim 1, wherein said coating film has a carbon content of from 5 to 60 atomic % based on the sum of the constituent elements other than hydrogen.

3. A magneto-optical recording medium as claimed in Claim 2, wherein said coating film has a carbon content of from 5 to 30 atomic % based on the sum of the constituent elements other than hydrogen.

4. A magneto-optical recording medium as claimed in Claim 1, wherein said coating film has a nitrogen content of at least 1 atomic % based on the sum of the constituent elements other than hydrogen.

5. A magneto-optical recording medium as claimed in Claim 1, wherein said coating film has an absorption in the infrared region at 2170 ± 30 $cm^{-1}$.

6. A process for producing a magneto-optical recording medium comprising a substrate having thereon a magneto-optical recording film and at least one coating film provided on the surface and/or back of said magneto-optical recording film, which comprises forming a coating film containing silicon, carbon, nitrogen, and hydrogen as constituent elements by reactive sputtering using metallic silicon as a target in a mixed gas comprising an inert gas, ammonia gas, and a hydrocarbon gas.

7. A process for producing a magneto-optical recording medium comprising a substrate having thereon a magneto-optical recording film and at least one coating film provided on the surface and/or back of said magneto-optical recording film, which comprises forming a coating film containing silicon, carbon, nitrogen, and hydrogen as constituent elements by reactive sputtering using metallic silicon as a target in a mixed gas comprising an inert gas, ammonia gas, a hydrocarbon gas, and a hydrogen gas.

8. A process for producing a magneto-optical recording medium comprising a substrate having thereon a magneto-optical recording film and at least one coating film provided on the surface and/or back of said magneto-optical recording film, which comprises forming a coating film containing silicon, carbon, nitrogen, and hydrogen as constituent elements by reactive sputtering using a mixed sintered body of silicon carbide and silicon nitride as a target in a mixed gas comprising an inert gas and a hydrogen gas.

FIG. 1

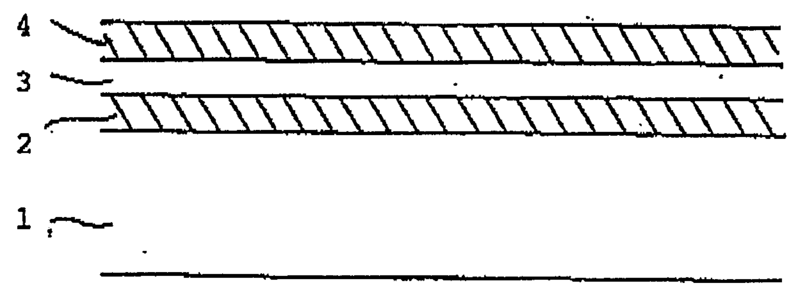


FIG. 2

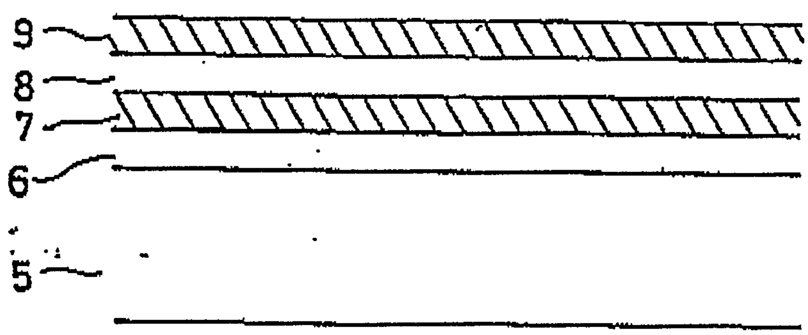

FIG. 3(a)

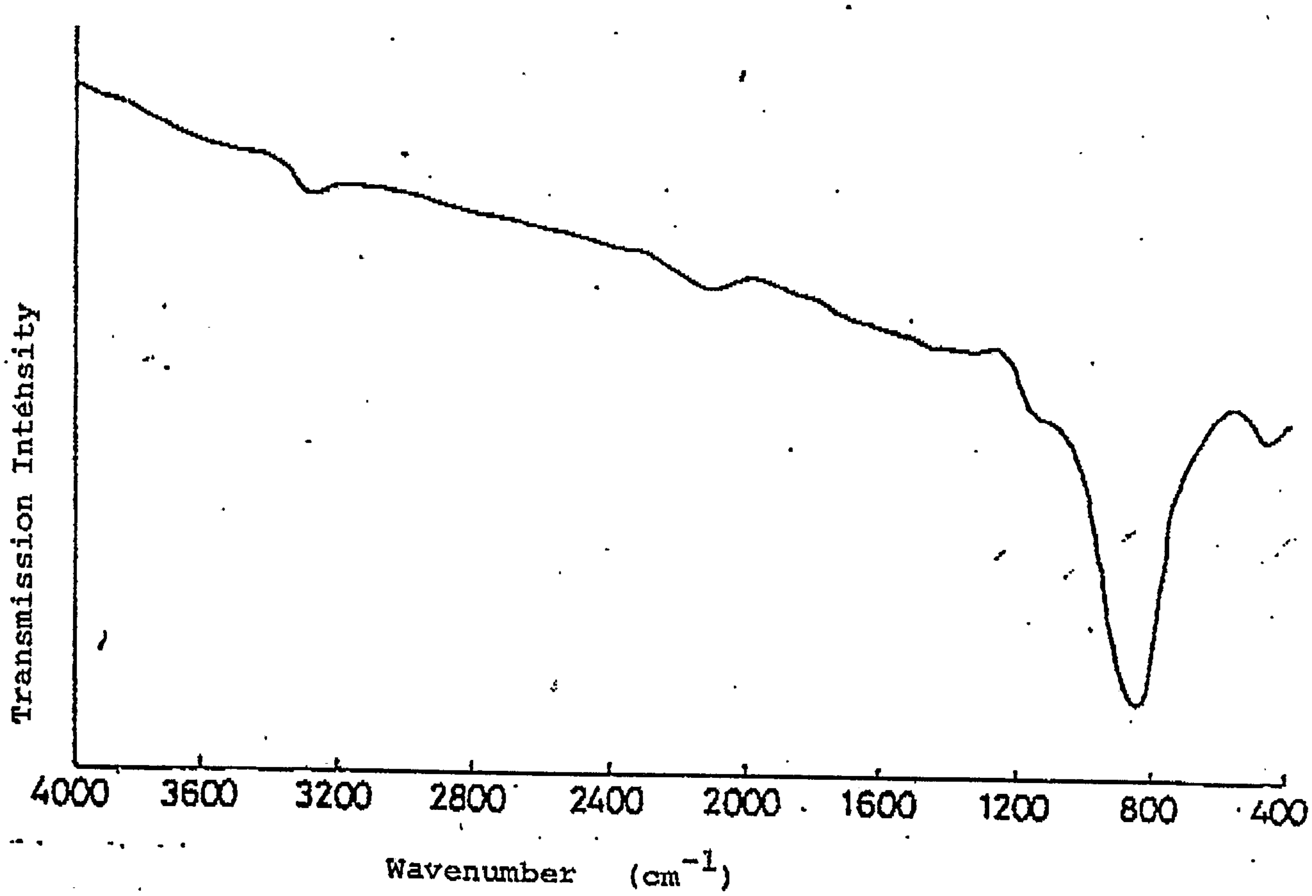
Transmission Intensity
4000
3600
3200
2800
2400
2000
1600
1200
800
400
Wavenumber (cm$^{-1}$)

FIG. 3(b)

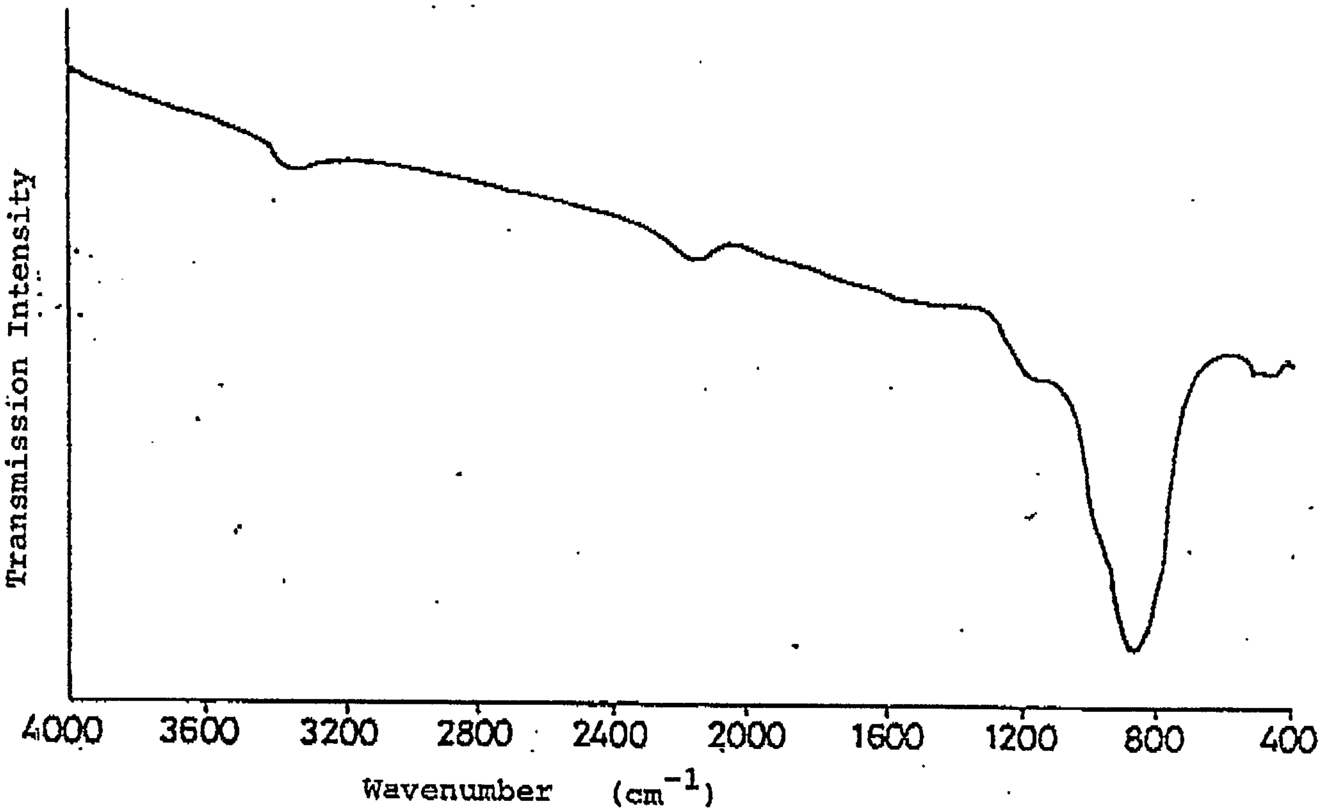
Transmission Intensity
4000
3600
3200
2800
2400
2000
1600
1200
800
400
Wavenumber (cm-1)

FIG. 3(c)

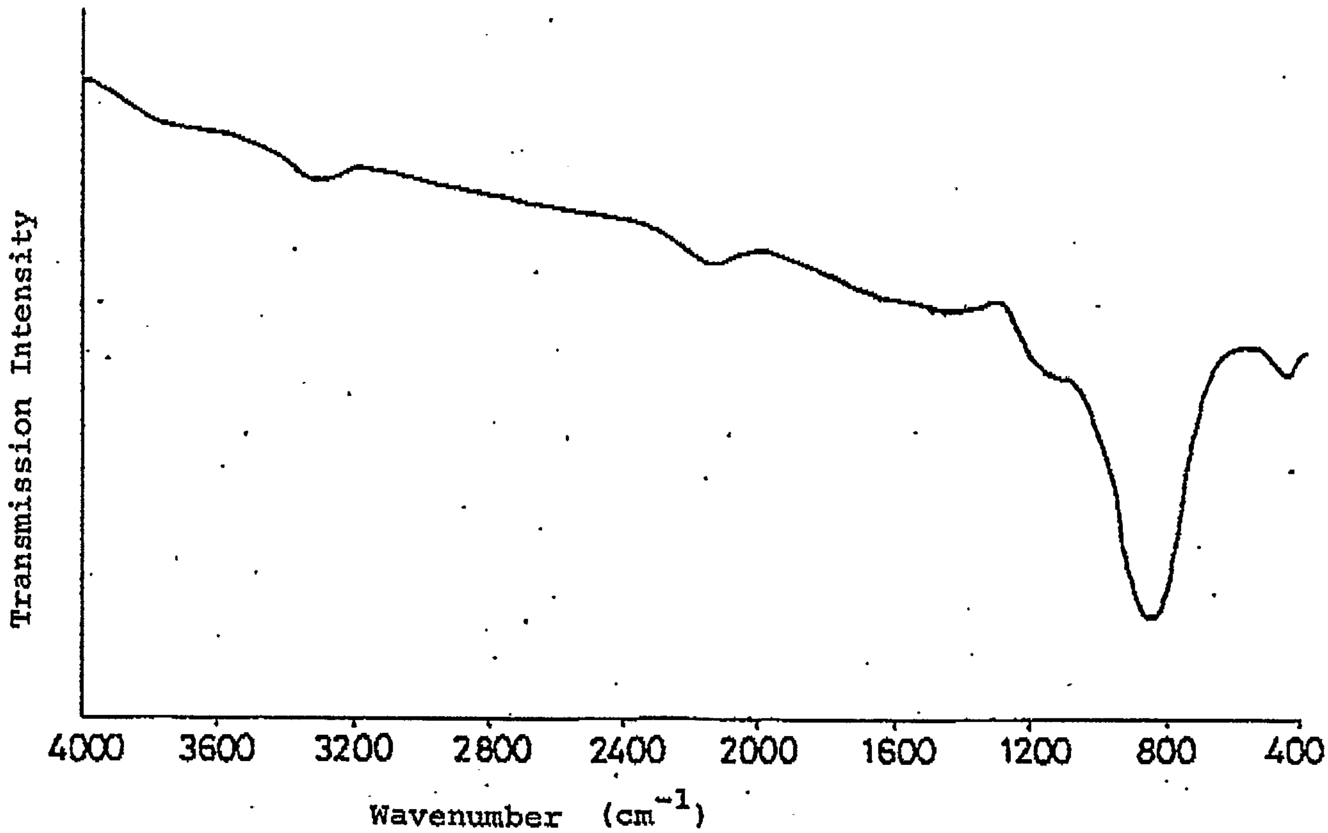
Transmission Intensity
4000
3600
3200
2800
2400
2000
1600
1200
800
400
Wavenumber (cm$^{-1}$)

FIG. 3(d)

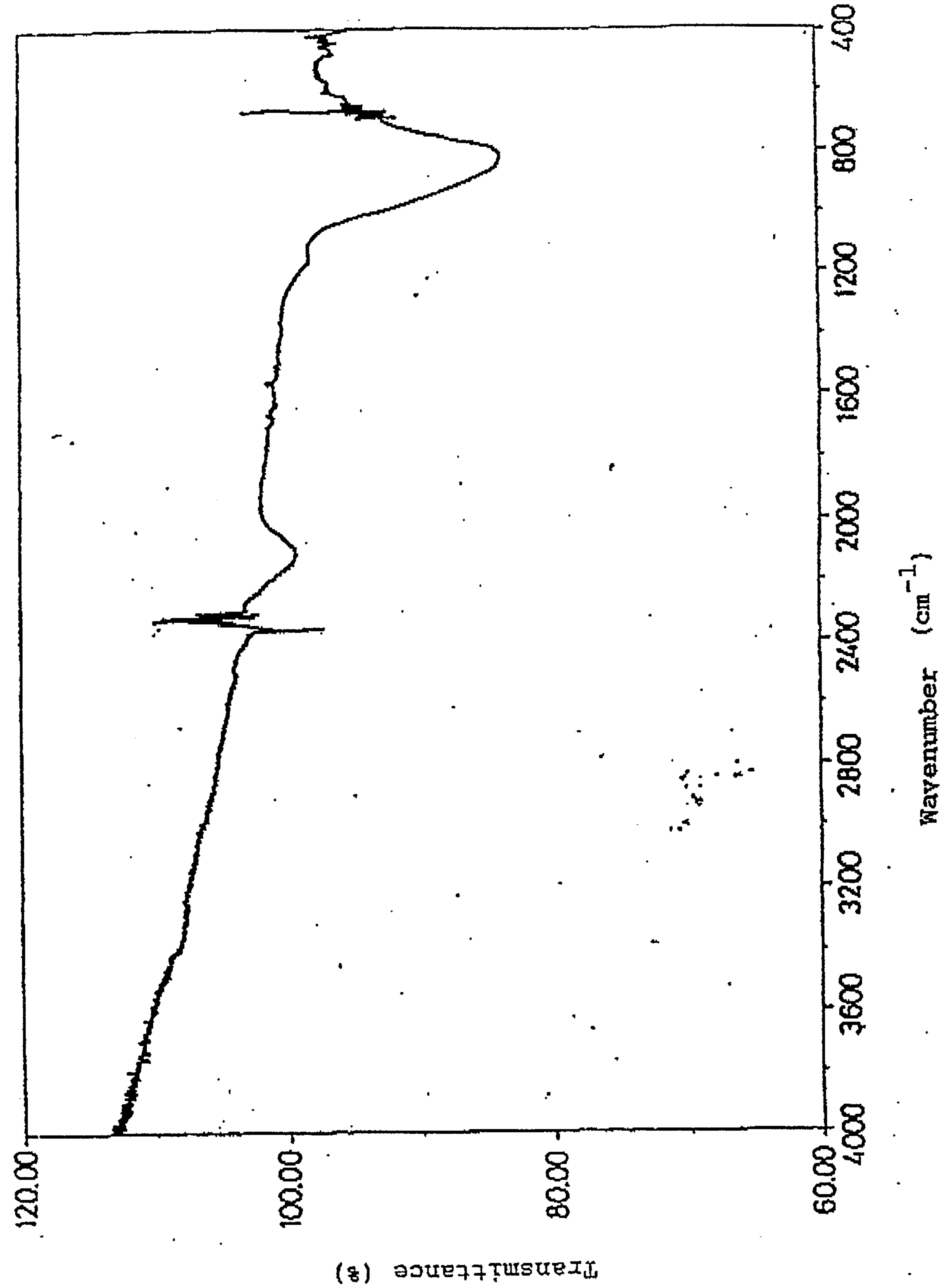
Transmittance (%)
120.00
100.00
80.00
60.00
Wavenumber (cm$^{-1}$)
4000
3600
3200
2800
2400
2000
1600
1200
800
400

Fig. 3(e)

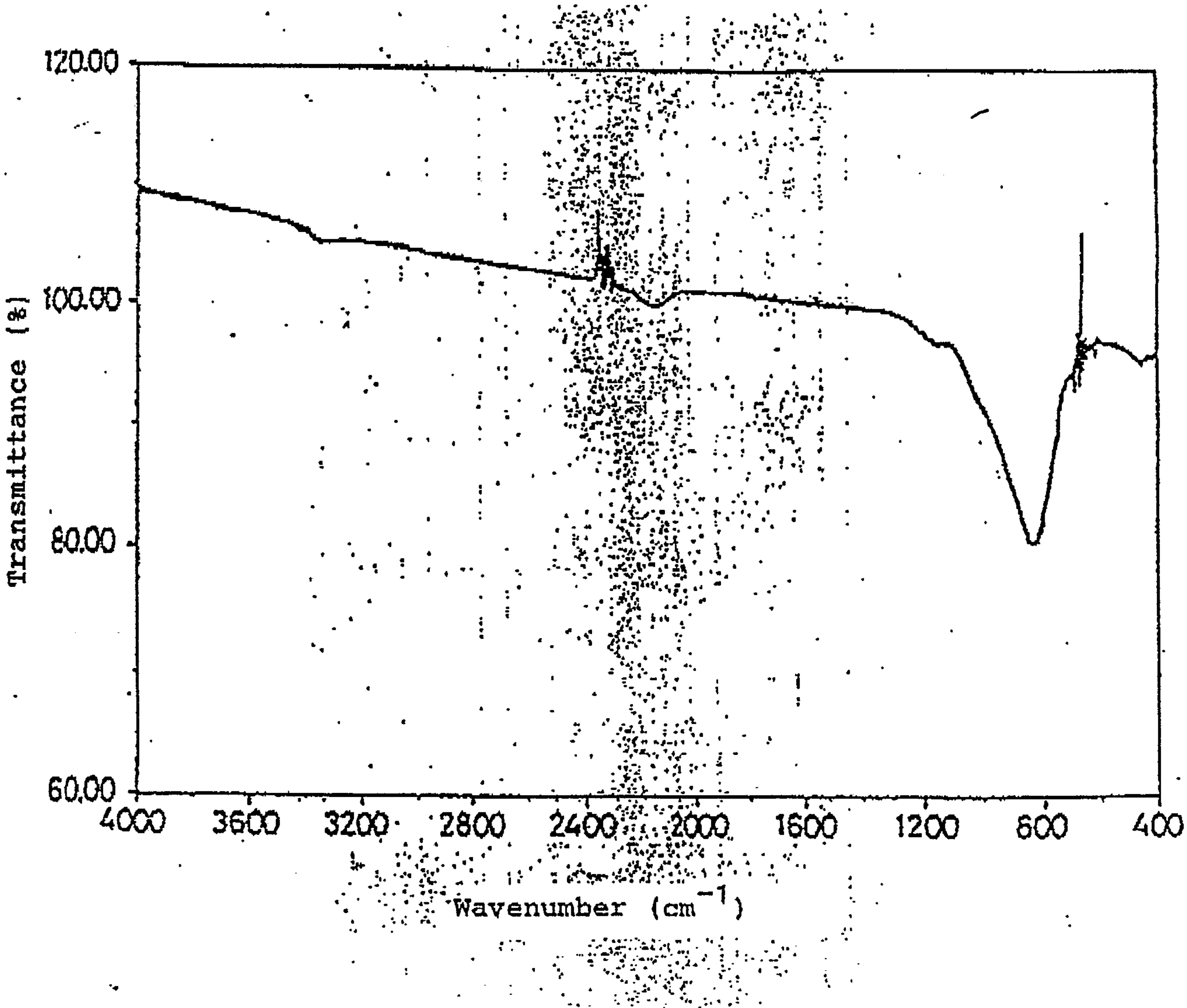
120.00
100.00
80.00
60.00
Transmittance (%)
4000
3600
3200
2800
2400
2000
1600
1200
800
400
Wavenumber (cm-1)

FIG. 4

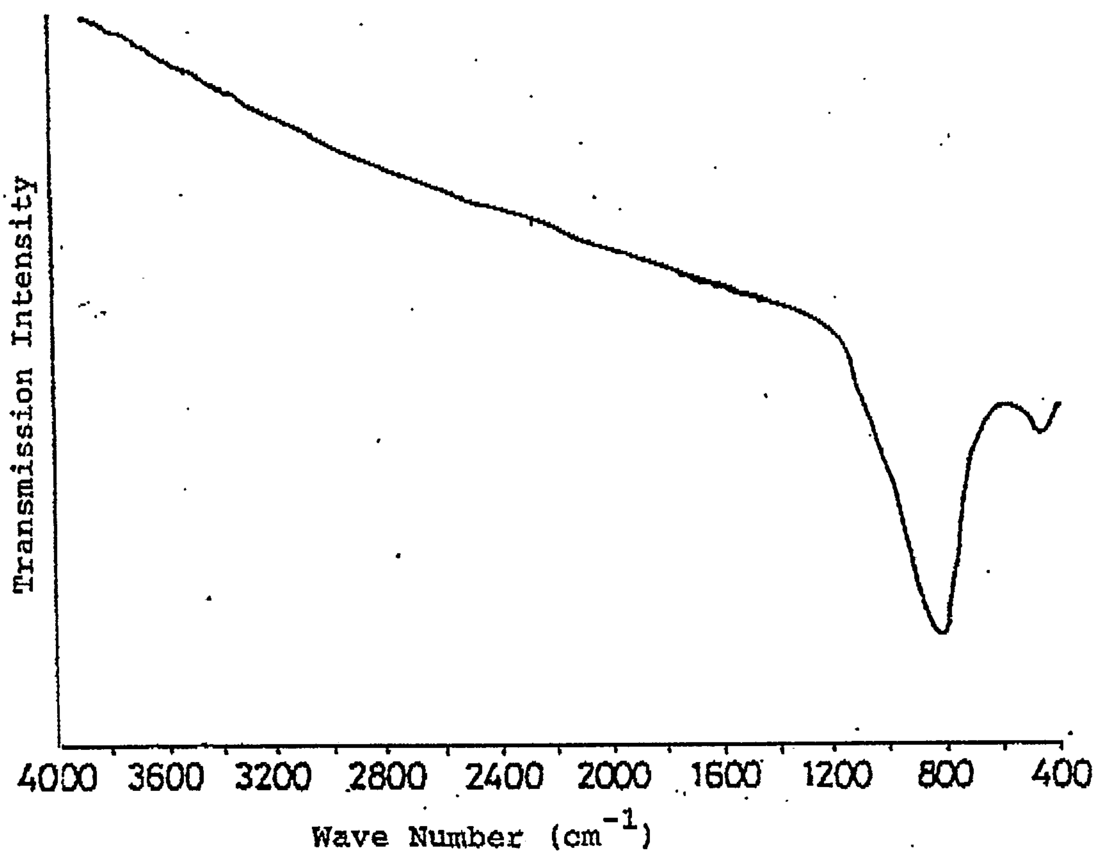
Transmission Intensity
4000 3600 3200 2800 2400 2000 1600 1200 800 400
Wave Number ($cm^{-1}$)

FIG. 5

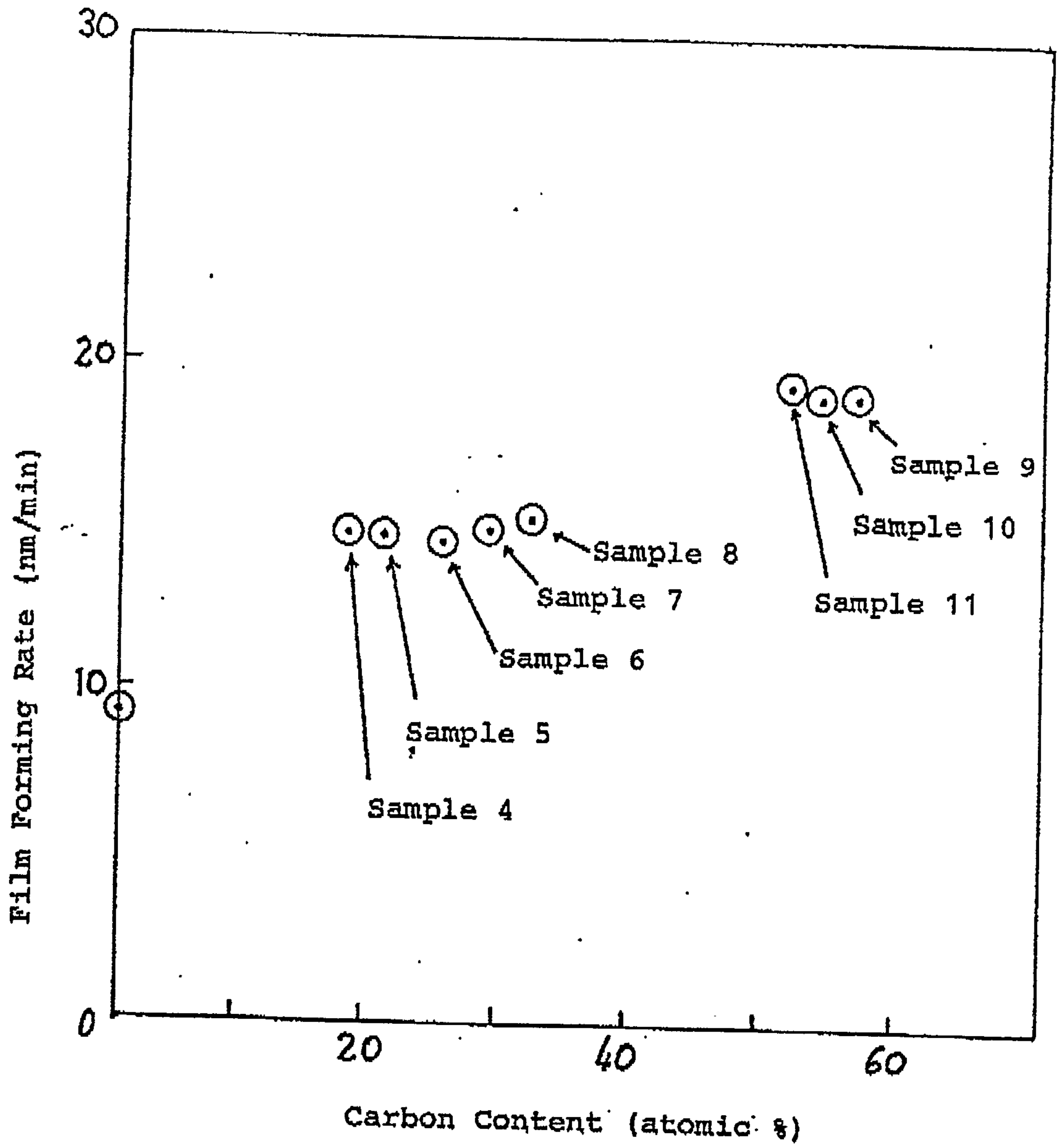
30
20
10
0
20
40
60
Film Forming Rate (nm/min)
Carbon Content (atomic %)
Sample 4
Sample 5
Sample 6
Sample 7
Sample 8
Sample 9
Sample 10
Sample 11

FIG. 6

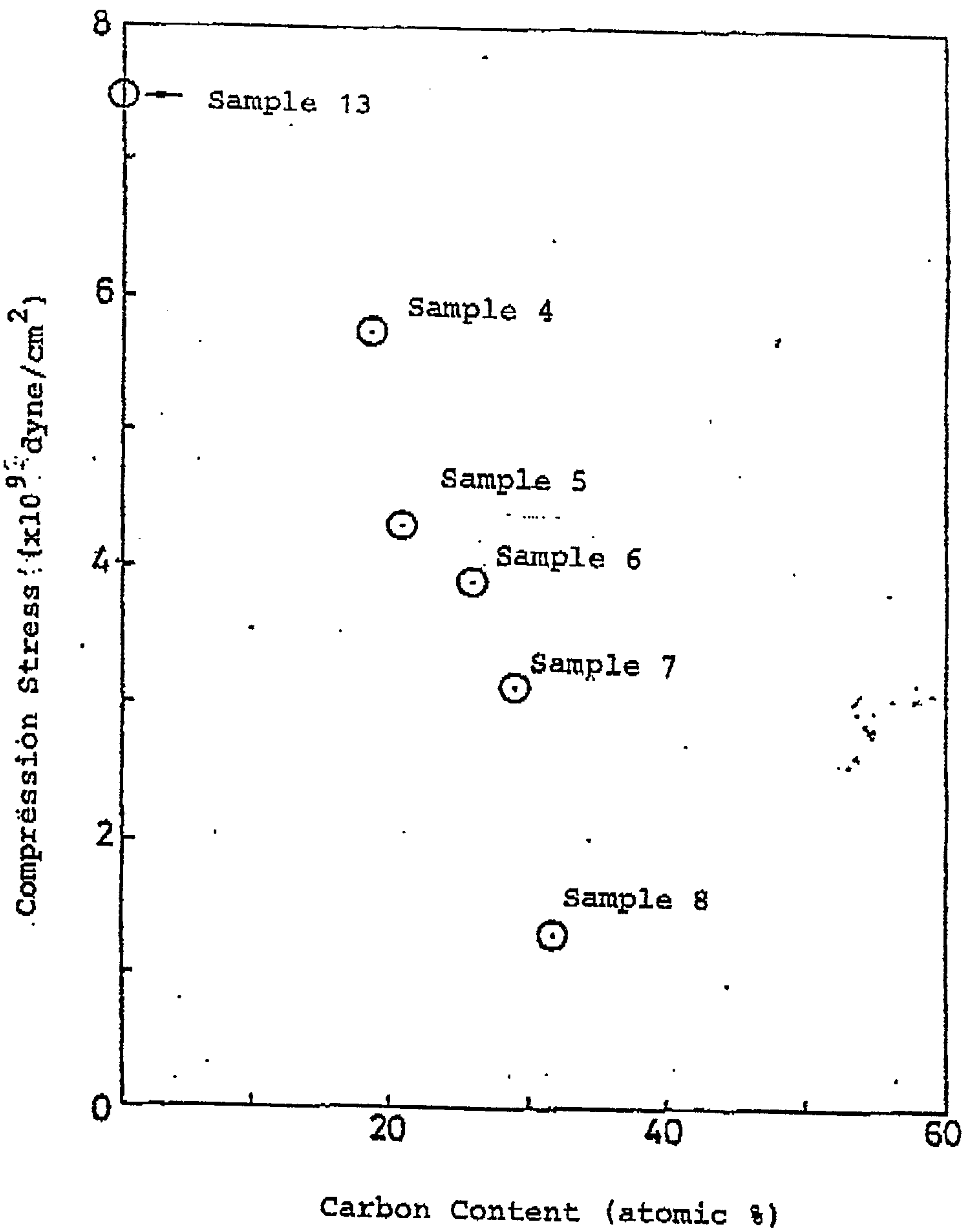

8
6
4
2
0
20
40
60
Sample 13
Sample 4
Sample 5
Sample 6
Sample 7
Sample 8
Compression Stress (x10$^9$ dyne/cm$^2$)
Carbon Content (atomic %)

FIG. 7

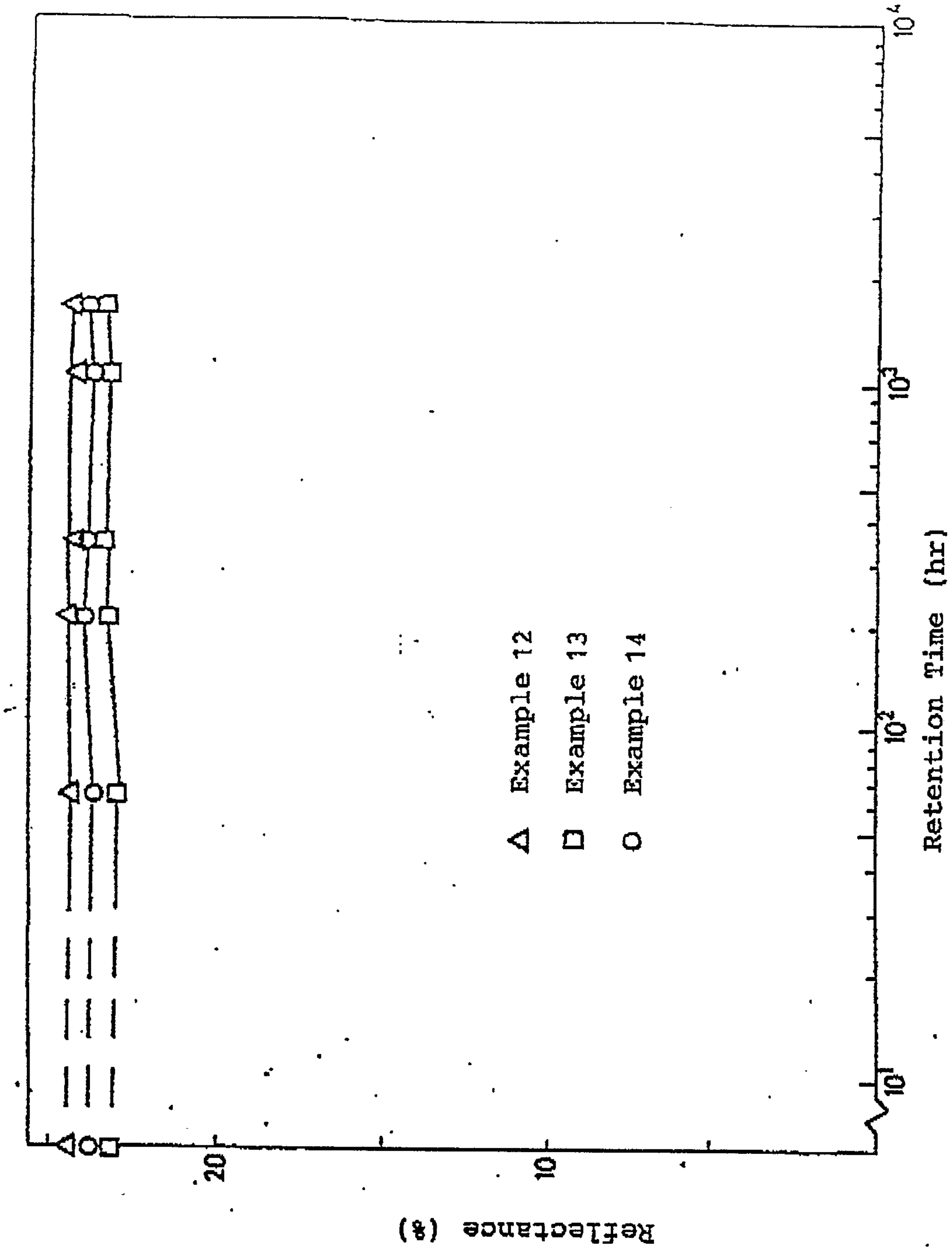
Reflectance (%)
20
10
Retention Time (hr)
$10^1$
$10^2$
$10^3$
$10^4$
△ Example 12
□ Example 13
○ Example 14

FIG. 8

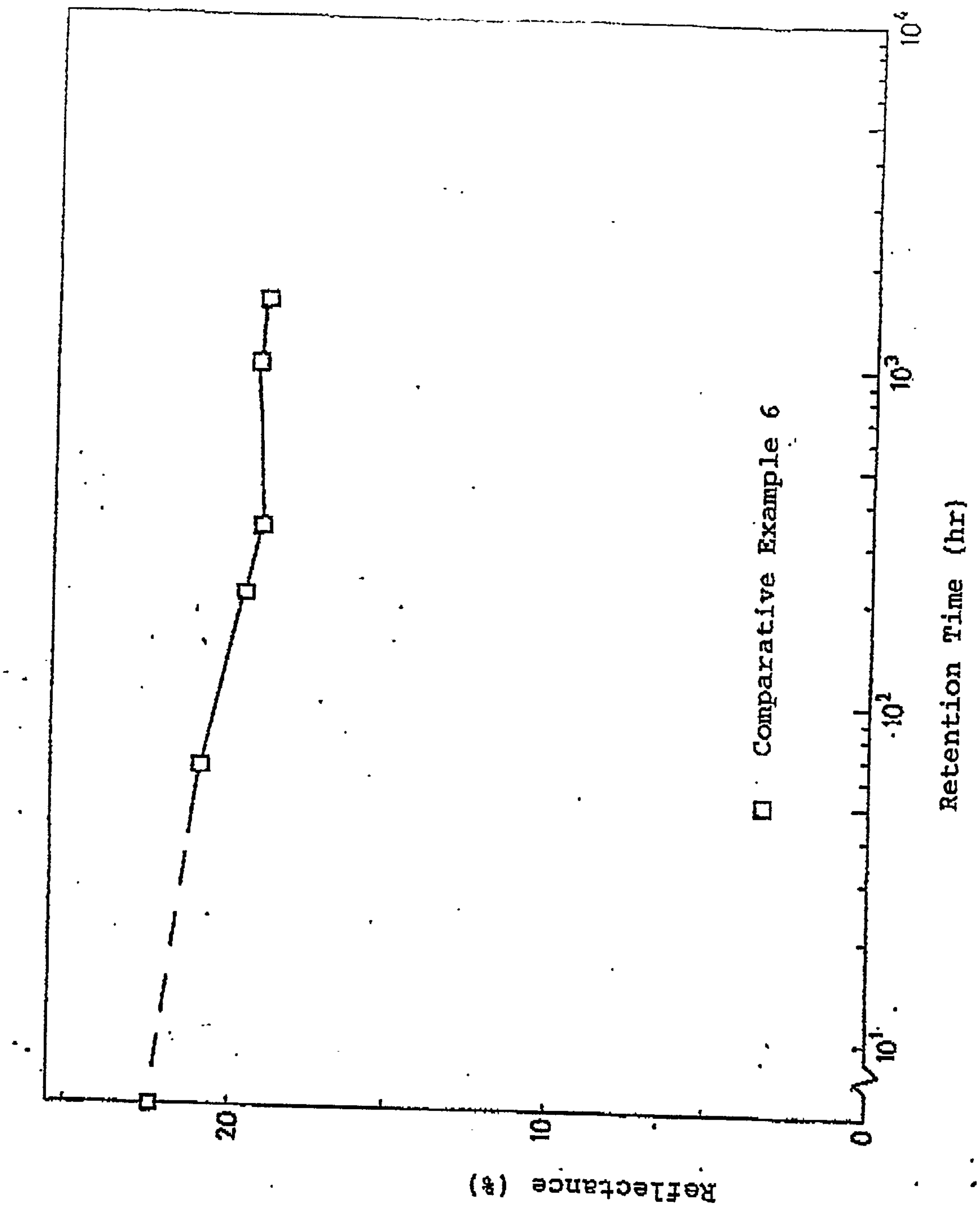
Reflectance (%)
0
10
20
Retention Time (hr)
$10^1$
$10^2$
$10^3$
$10^4$
Comparative Example 6

FIG. 9

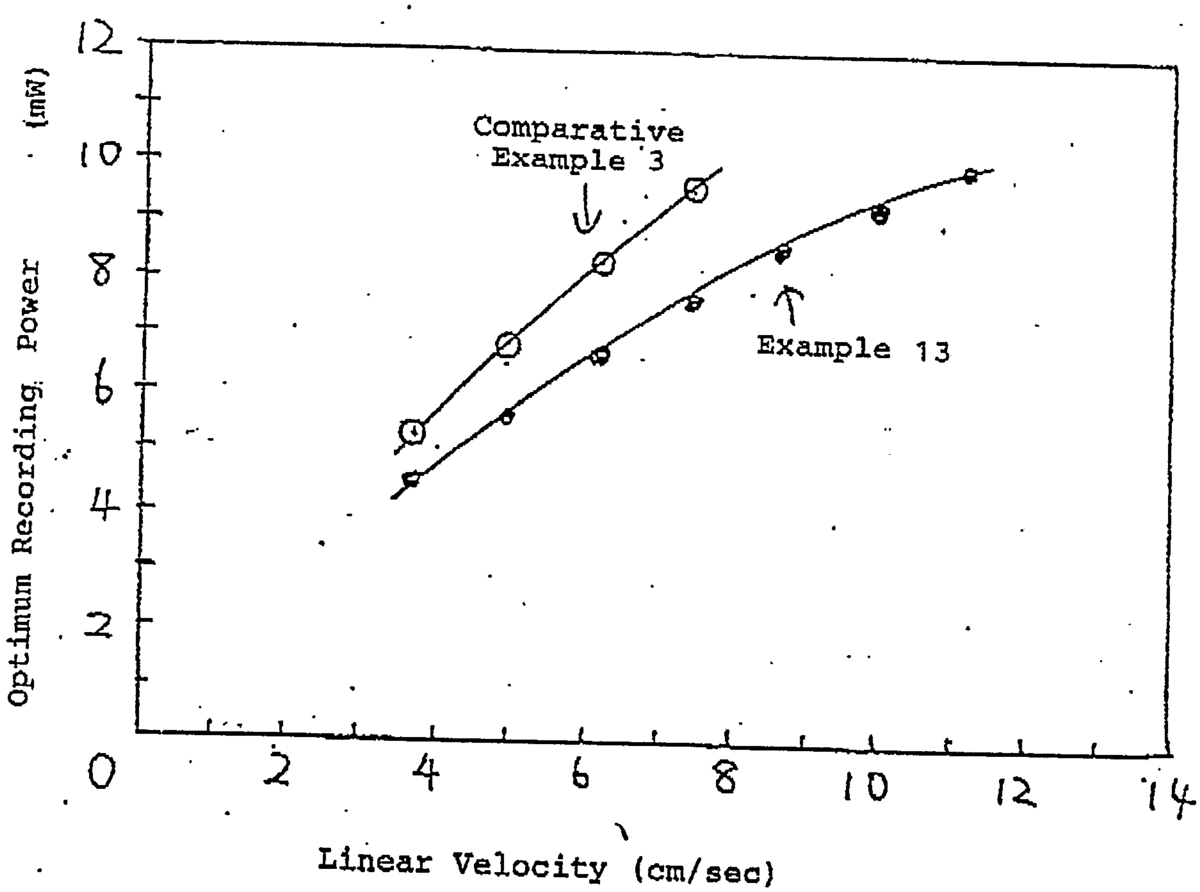
Optimum Recording Power (mW)
12
10
8
6
4
2
0
2
4
6
8
10
12
14
Comparative Example 3
Example 13
Linear Velocity (cm/sec)

FIG. 10

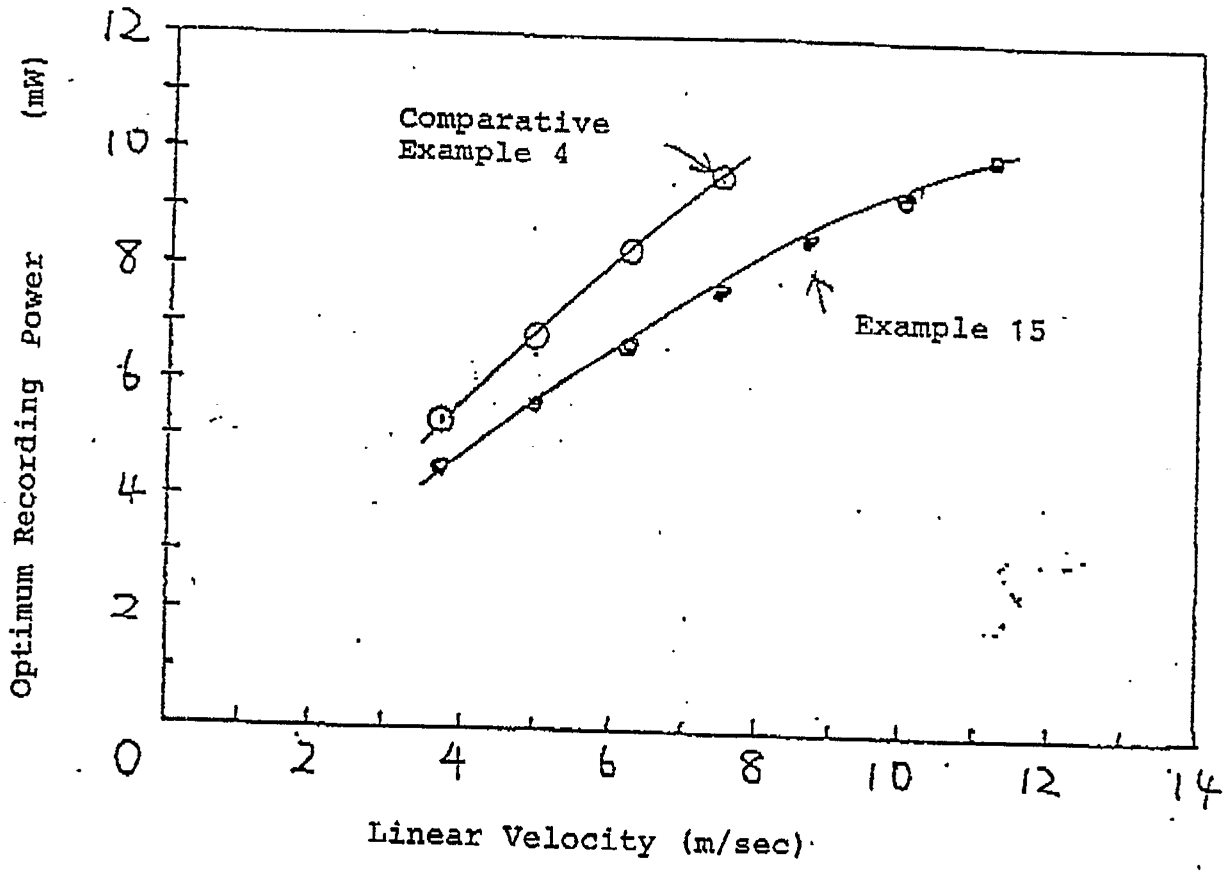
Optimum Recording Power (mW)
12
10
8
6
4
2
0
Comparative Example 4
Example 15
2
4
6
8
10
12
14
Linear Velocity (m/sec)

FIG. 11(a)

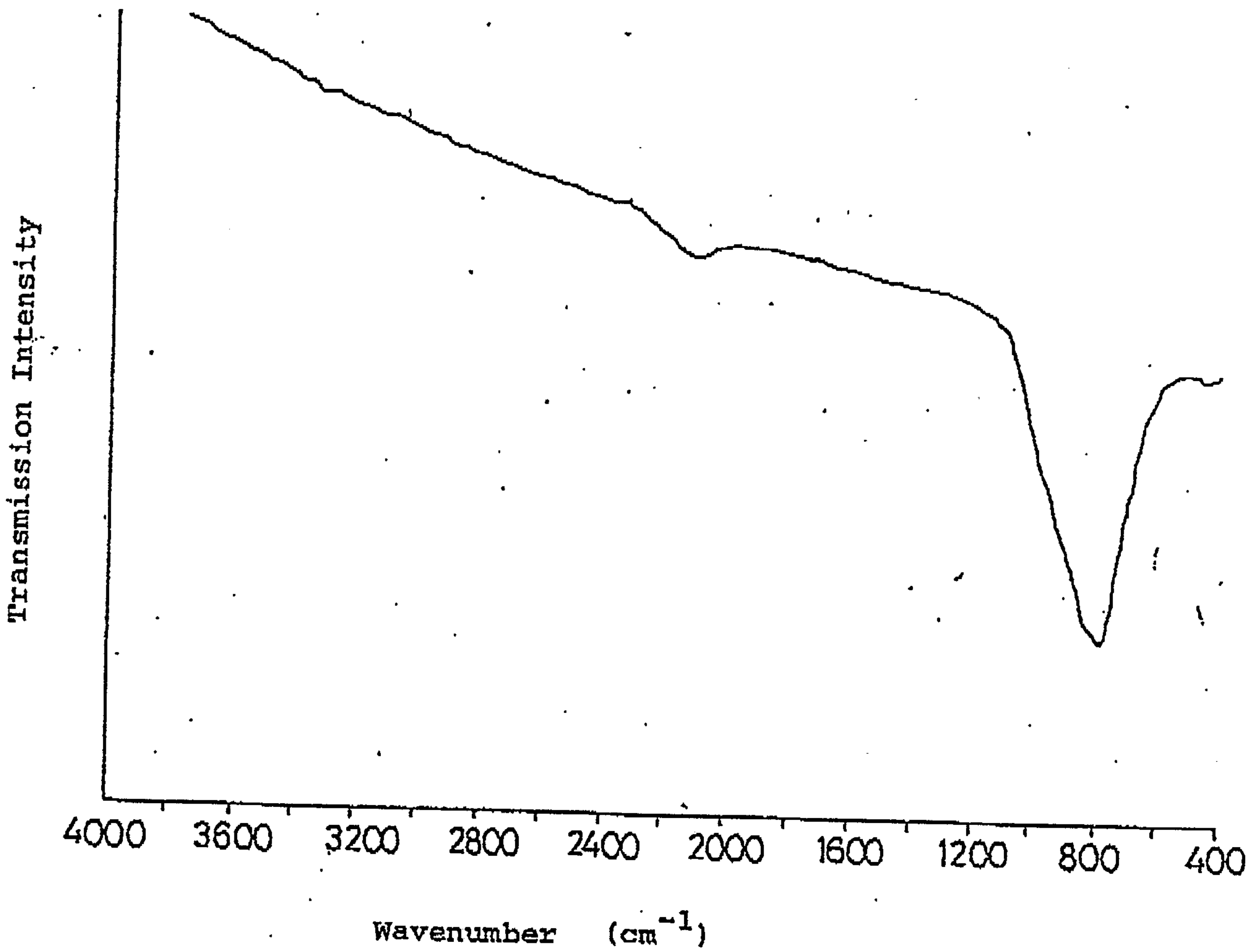
Transmission Intensity
4000
3600
3200
2800
2400
2000
1600
1200
800
400
Wavenumber (cm$^{-1}$)

FIG. 11(b)

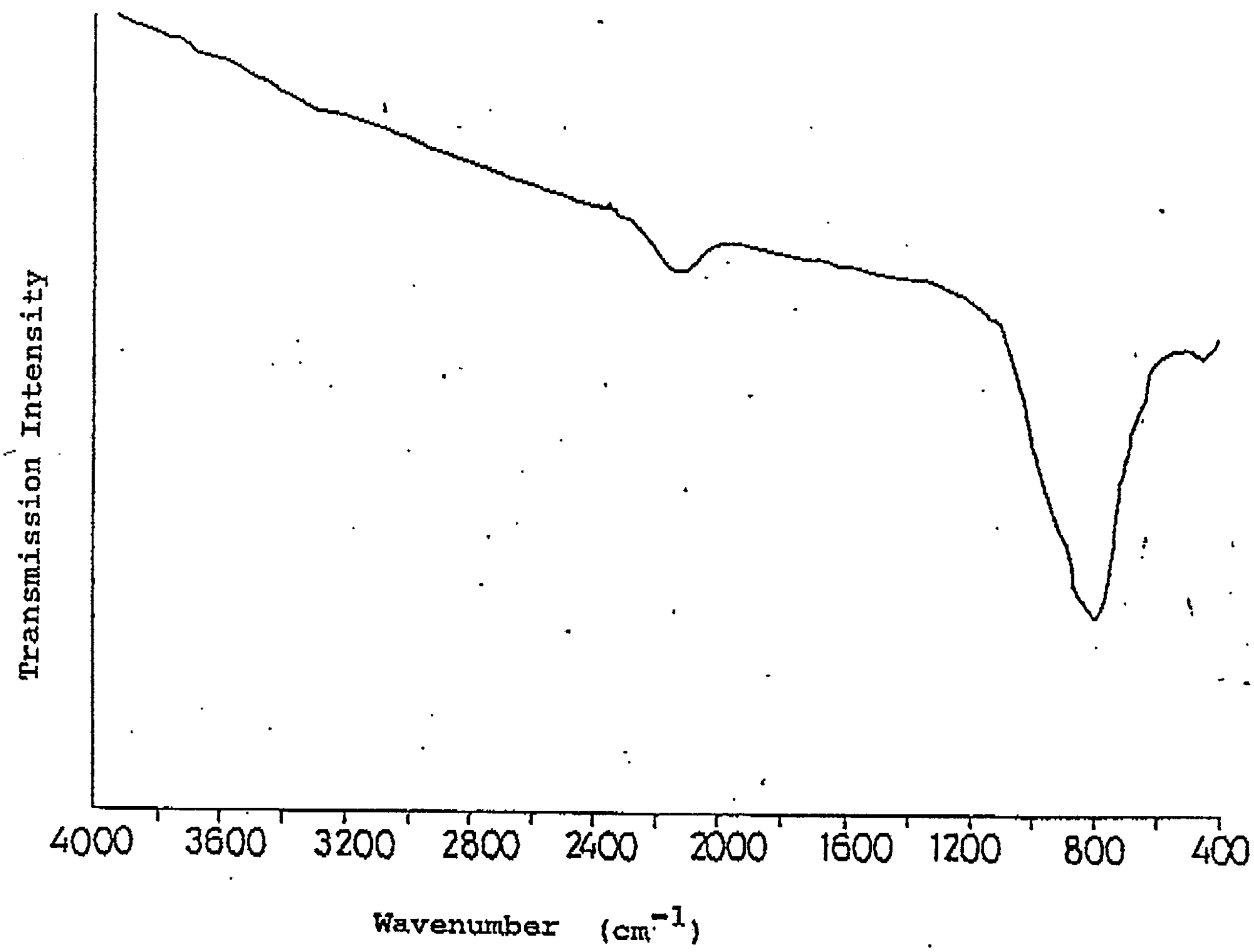
Transmission Intensity
4000
3600
3200
2800
2400
2000
1600
1200
800
400
Wavenumber (cm$^{-1}$)

FIG. 11(c)

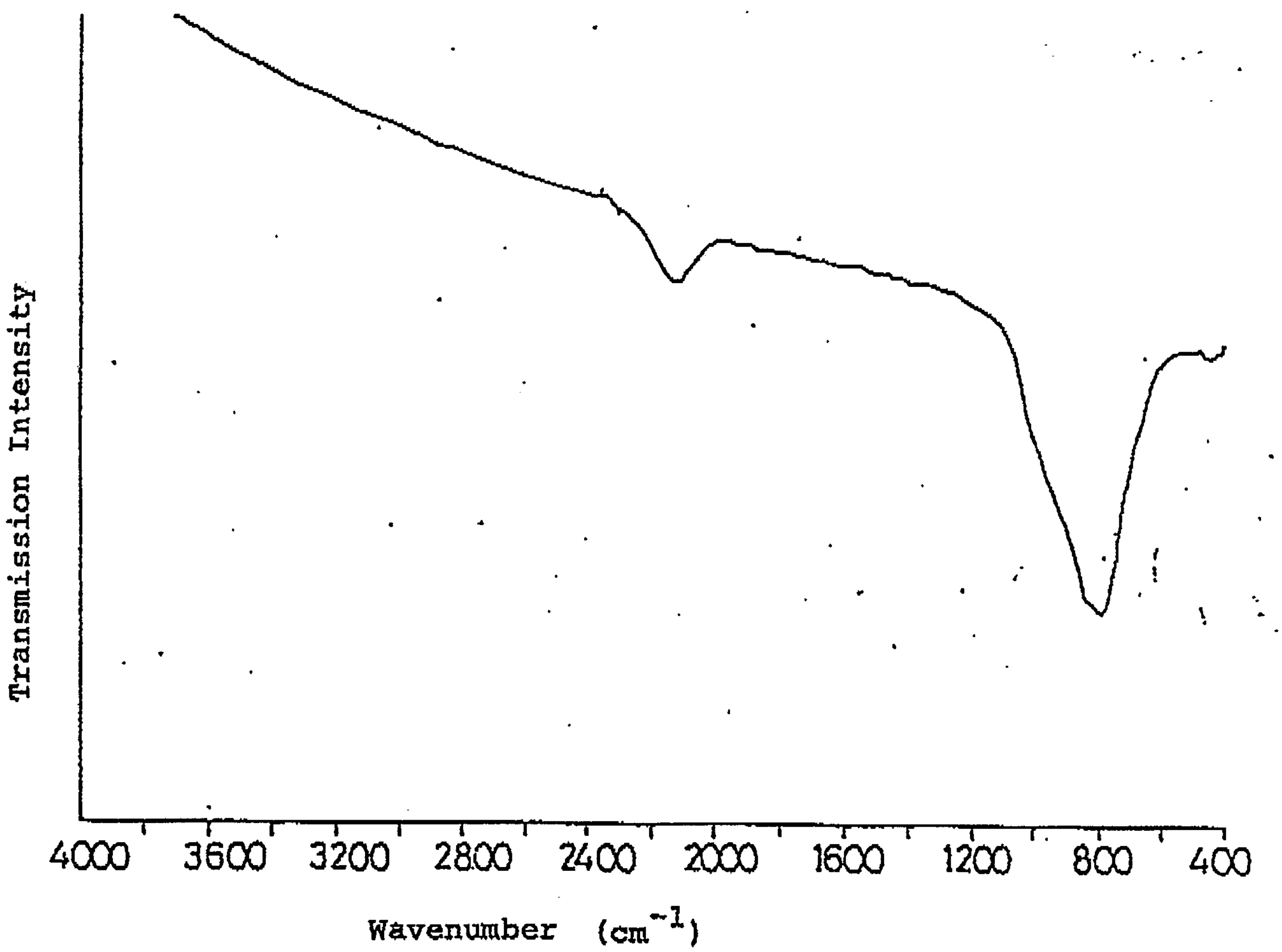
Transmission Intensity
4000
3600
3200
2800
2400
2000
1600
1200
800
400
Wavenumber (cm-1)

FIG. 12

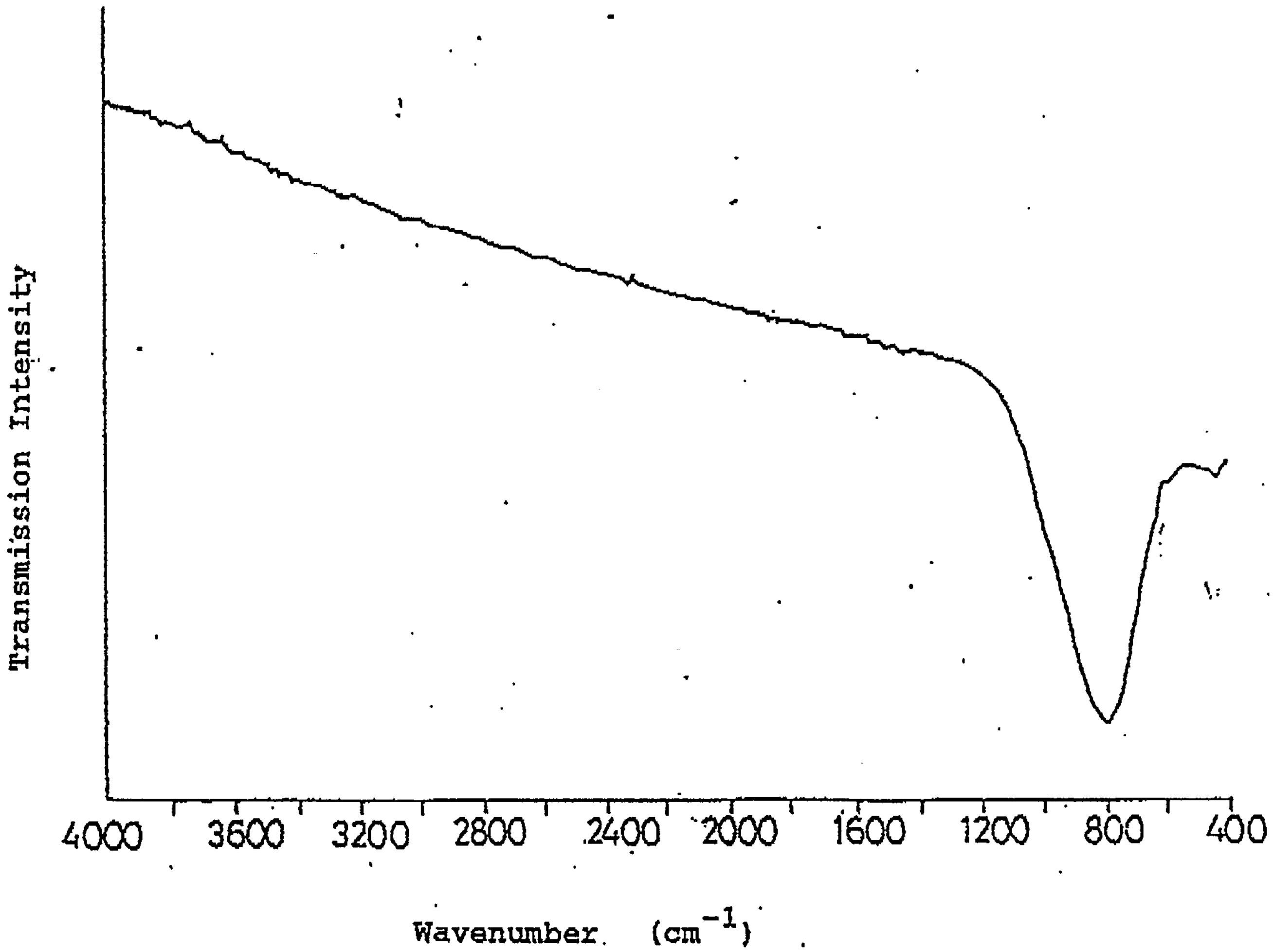
Transmission Intensity
4000
3600
3200
2800
2400
2000
1600
1200
800
400
Wavenumber (cm-1)